# EUROPEAN PATENT APPLICATION

(11) **EP 4 706 411 A2**
(43) Date of publication of application: **11.03.2026**
(21) Application number: 25223034.7
(22) Date of filing: 24.02.2017
(51) Int. Cl.: A24B 15/18

(54) **METHOD OF MANUFACTURING A PRE-VAPOR FORMULATION INCLUDING VOLATILES**

(30) Priority: 25.02.2016 US 201615052940
(62) Divisional of application: 20166324.2
(71) Applicant: Philip Morris Products S.A., 2000 Neuchâtel (CH)
(72) Inventor: KARLES, Georgios D, Richmond, 23219 (US); LI, San, Midlothian, 23114 (US); LI, Weiling, Moseley, 23120 (US); RAGLAND, Ben, Providence Force, 23140 (US); SENA, Erica, Midlothian, 23114 (US)
(74) Representative: Reddie & Grose LLP

(57) **Abstract**

A method of extracting volatiles from tobacco material and a method of making a pre-vapor formulation including the volatiles includes heating (100) tobacco material to release volatiles, collecting (200) the extracted volatiles, and combining (300) the volatiles with a pre-vapor formulation.

## Description

The present disclosure relates to a method of extracting volatiles from tobacco material and a method of making a pre-vapor formulation including the extracted volatiles.

An electronic vaping device includes a heater element, which vaporizes a pre-vapor formulation to produce a vapor. The pre-vapor formulation may include at least one of aerosol formers, water, and flavors.

At least one example embodiment is related to a method of extracting volatiles from tobacco material and a method of making a pre-vapor formulation including the extracted volatiles.

In at least one example embodiment, a method of making a pre-vapor formulation includes heating tobacco material to a temperature ranging from about 50 degrees Celsius to about 250 degrees Celsius to form heated tobacco material, collecting volatiles from the heated tobacco material, and combining the volatiles with a pre-vapor formulation after the collecting step. Preferably, the step of combining the volatiles with the pre-vapor formulation is carried out immediately after the collecting step. As used herein, the term "immediately" is used to refer to the combining of the collected volatiles with the pre-vapor formulation without any intervening steps between the collecting step and the combining step.

In the heating step the tobacco material is heated to a temperature ranging from about 50 degrees Celsius to about 250 degrees Celsius, preferably about 100 degrees Celsius to about 200 degrees Celsius, preferably about 125 degrees Celsius to about 175 degrees Celsius.

Preferably, the heating step is conducted at standard atmospheric pressure.

In at least one example embodiment, the method may further include combining an additive with the tobacco material prior to the heating step. The additive may promote Maillard reactions. The additive may promote enzymatic hydrolysis to facilitate release of flavors. The additive may include one or more of a casing solution, a solvent, a pH adjuster, and a flavorant. The solvent may include one or more of water, ethanol, glycerine, and propylene glycol.

In at least one example embodiment, the collecting step may include inserting adsorbent material in the heated tobacco material. The adsorbent material is configured to adsorb the volatiles. The method may also include at least one of desorbing the volatiles from the adsorbent material, placing the adsorbent material in a reservoir containing the pre-vapor formulation, and placing the adsorbent material in an electronic vaping device.

In at least one example embodiment, the collecting step may include condensing the volatiles.

In at least one example embodiment, the collecting step may include bubbling the volatiles through a solvent trap.

In at least one example embodiment, the method may also include rotating the tobacco material during the heating step.

In at least one example embodiment, the tobacco material may be in the form of one of a slurry, a wet tobacco mass, and a substantially dry tobacco mass.

In at least one example embodiment, the method may also include maintaining the pre-vapor formulation at or below room temperature.

In at least one example embodiment, the method may also include adjusting a pH of the tobacco material prior to the heating step.

In at least one example embodiment, the tobacco material may be heated for about 2 seconds to about 1 hour, preferably for about 2 seconds to about 5 minutes. In at least one example embodiment, the tobacco material may be heated for about 1 second to about 1 hour, preferably about 2 seconds to about 50 minutes, preferably about 5 seconds to about 40 minutes, preferably about 10 seconds to about 30 minutes, preferably about 20 seconds to about 20 minutes. Preferably, the volatiles are combined with the pre-vapor formulation immediately after the collecting.

In at least one example embodiment, the tobacco material comprises a blend of two or more different tobacco varieties.

The invention is defined in the claims. However, below there is provided a non-exhaustive list of non-limiting examples. Any one or more of the features of these examples may be combined with any one or more features of another example, embodiment, or aspect described herein.

Example Ex1: A method of making a pre-vapor formulation, the method comprising:
heating tobacco material to a temperature ranging from about 50 degrees Celsius to about 250 degrees Celsius to form heated tobacco material;
collecting volatiles from the heated tobacco material; and
combining the volatiles with a pre-vapor formulation immediately after the collecting step.

Example Ex2: The method of example Ex1, further comprising:
combining an additive with the tobacco material prior to the heating step.

Example Ex3: The method of example Ex2, wherein the additive includes one or more of a casing solution, a solvent, a pH adjuster, and a flavorant.

Example Ex4: The method of example Ex3, wherein the solvent includes one or more of water, ethanol, glycerine, and propylene glycol.

Example Ex5: The method of example Ex2, Ex3 or Ex4, wherein the additive is chosen to promote Maillard reactions.

Example Ex6: The method of any of examples Ex2 to Ex5, wherein the additive is chosen to promote enzymatic hydrolysis so as to facilitate release of flavors.

Example Ex7: The method of any preceding example, wherein the collecting step comprises:
inserting adsorbent material in the heated tobacco material, the adsorbent material configured to adsorb the volatiles.

Example Ex8: The method of example Ex7, wherein the combining step comprises:
desorbing the volatiles from the adsorbent material.

Example Ex9: The method of example Ex7 or Ex8, wherein the combining step comprises:
placing the adsorbent material in a reservoir containing the pre-vapor formulation.

Example Ex10: The method of any preceding example, wherein the collecting volatiles comprises:
condensing the volatiles.

Example Ex11: The method of any preceding example, wherein the collecting volatiles comprises:
bubbling the volatiles through a solvent trap.

Example Ex12: The method of any preceding example, further comprising:
rotating the tobacco material during the heating step.

Example Ex13: The method of any preceding example, wherein the tobacco material is in the form of one of a slurry, a wet tobacco mass, and a substantially dry tobacco mass.

Example Ex14: The method of any preceding example, further comprising:
maintaining the pre-vapor formulation at or below room temperature.

Example Ex15: The method of any preceding example, wherein the tobacco material is heated for about 2 seconds to about 1 hour.

Example Ex16: The method of any preceding example, wherein the tobacco material comprises a blend of two or more different tobacco varieties.

Example Ex17: The method of any preceding example, further comprising:
adjusting a pH of the tobacco material prior to the heating step.

The various features and advantages of the non-limiting embodiments herein may become more apparent upon review of the detailed description in conjunction with the accompanying drawings. The accompanying drawings are merely provided for illustrative purposes and should not be interpreted to limit the scope of the claims. The accompanying drawings are not to be considered as drawn to scale unless explicitly noted. For purposes of clarity, various dimensions of the drawings may have been exaggerated.
FIG. 1 is a diagram illustrating an apparatus for extracting volatiles from tobacco material and manufacturing a pre-vapor formulation according to at least one example embodiment.
FIG. 2 is a flowchart illustrating a method of making a pre-vapor formulation according to at least one example embodiment.
FIG. 3 is a flowchart illustrating a heating step according to at least one example embodiment.
FIG. 4 is a flowchart illustrating a collecting step and a combining step according to at least one example embodiment.
FIG. 5 is a flowchart illustrating a collecting step and a combining step according to at least one example embodiment.
FIG. 6 is a flowchart illustrating a collecting step according to at least one example embodiment.

Some detailed example embodiments are disclosed herein. However, specific structural and functional details disclosed herein are merely representative for purposes of describing example embodiments. Example embodiments may, however, be embodied in many alternate forms and should not be construed as limited to only the example embodiments set forth herein.

Accordingly, while example embodiments are capable of various modifications and alternative forms, example embodiments thereof are shown by way of example in the drawings and will herein be described in detail. It should be understood, however, that there is no intent to limit example embodiments to the particular forms disclosed, but to the contrary, example embodiments are to cover all modifications, equivalents, and alternatives falling within the scope of example embodiments. Like numbers refer to like elements throughout the description of the figures.

It should be understood that when an element or layer is referred to as being "on," "connected to," "coupled to," or "covering" another element or layer, it may be directly on, connected to, coupled to, or covering the other element or layer or intervening elements or layers may be present. In contrast, when an element is referred to as being "directly on," "directly connected to," or "directly coupled to" another element or layer, there are no intervening elements or layers present.

It should be understood that, although the terms first, second, third, and so forth may be used herein to describe various elements, components, regions, layers or sections, these elements, components, regions, layers, or sections should not be limited by these terms. These terms are only used to distinguish one element, component, region, layer, or section from another element, component, region, layer, or section. Therefore, a first element, component, region, layer, or section discussed below could be termed a second element, component, region, layer, or section without departing from the teachings of example embodiments.

Spatially relative terms (for example, "beneath," "below," "lower," "above," "upper," and the like) may be used herein for ease of description to describe one element or feature's relationship to another element or feature as illustrated in the figures. It should be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Therefore, the term "below" may encompass both an orientation of above and below. The device may be otherwise oriented (rotated 90 degrees or at other orientations) and the spatially relative descriptors used herein interpreted accordingly.

The terminology used herein is for the purpose of describing various example embodiments only and is not intended to be limiting of example embodiments. As used herein, the singular forms "a," "an," and "the" are intended to include the plural forms as well, unless the context clearly indicates otherwise. It will be further understood that the terms "includes," "including," "comprises," and "comprising," when used in this specification, specify the presence of stated features, integers, steps, operations, elements, or components, but do not preclude the presence or addition of one or more other features, integers, steps, operations, elements, components, and groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques or tolerances, are to be expected. Therefore, example embodiments should not be construed as limited to the shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which example embodiments belong. It will be further understood that terms, including those defined in commonly used dictionaries, should be interpreted as having a meaning that is consistent with their meaning in the context of the relevant art and will not be interpreted in an idealized or overly formal sense unless expressly so defined herein.

An electronic vaping device, such as an electronic cigarette or an electronic cigar, produces a vapor upon heating a pre-vapor formulation. The vapor may pass through a substrate including tobacco material, where the vapor elutes volatiles from the tobacco material. **In** other embodiments, tobacco material may be heated. The volatiles may be low volatility compounds that have a tendency to stay at the heater, which may cause decomposition at the high temperatures of the heater and may form a residue that may degrade performance of the heater.

At least one example embodiment, relates to a method of extracting volatiles from tobacco material and adding the volatiles to a pre-vapor formulation. At least one example embodiment relates to an apparatus for forming the pre-vapor formulation including extracted volatiles.

In at least one example embodiment, the pre-vapor formulation may be a material or combination of materials that may be transformed into a vapor. For example, the pre-vapor formulation may comprise at least one of a liquid, a solid, and a gel formulation including, but not limited to, water, beads, solvents, active ingredients, ethanol, plant extracts, natural or artificial flavors, vapor formers such as glycerin and propylene glycol, and combinations thereof. The pre-vapor formulation includes volatiles extracted from tobacco as described herein.

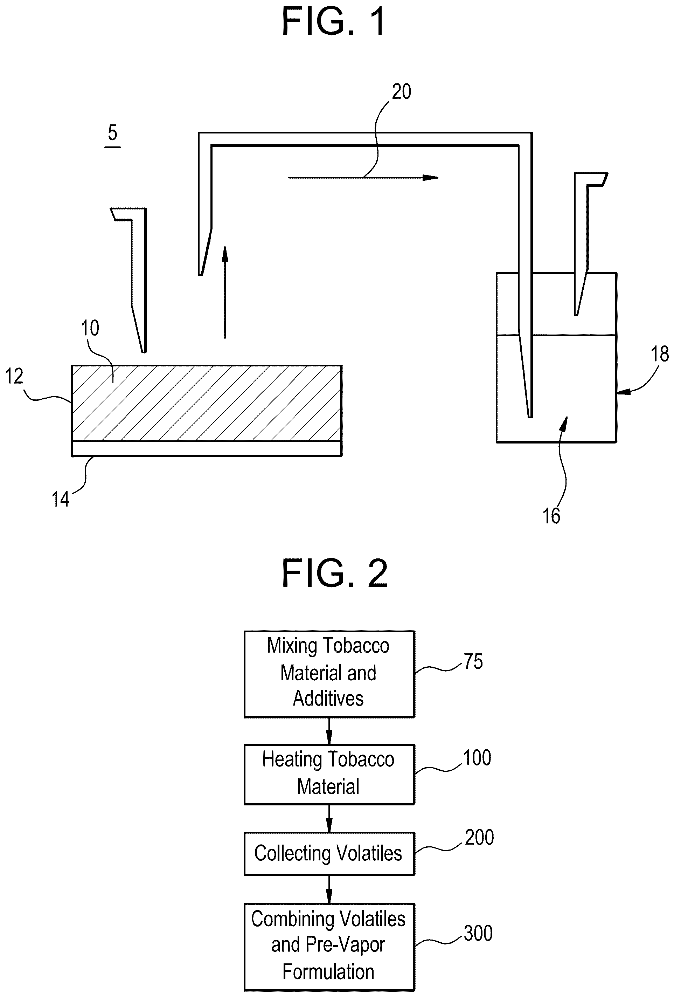

FIG. 1 is a diagram illustrating an apparatus for extracting volatiles from tobacco material and manufacturing a pre-vapor formulation according to at least one example embodiment.

The various figures show sequential process steps. It should be understood by those skilled in the art that these different steps may involve batch, continuous or semi-batch operations. For example, the mass of treated tobacco may be mixed with additives and also pressurized at certain temperatures in a batch type vessel for a certain period of time before it is vented off or purged into a collection vessel. It should also be understood that fermentation or enzymatic processes potential to produce tobacco specific flavors are also included as part of the process for tobacco flavor creation and isolation.

In at least one example embodiment, as shown in Figure 1, an apparatus 5 for making the pre-vapor formulation is provided. The apparatus 5 may include a vessel 12 configured to hold tobacco material 10. A heat source 14 heats the tobacco material 10 to release volatiles 20 from the tobacco material 10. The heat source 14 may be an electrical heat source, which may be controlled, monitored or both controlled and monitored by a control unit (not shown). In at least one example embodiment, heating may also be achieved by treating the tobacco material with steam or a mixture of steam with air. The volatiles 20 are collected and directed to a vessel 18 containing the pre-vapor formulation 16. In at least one example embodiment, the volatiles 20 are combined in the vessel 18 with the pre-vapor formulation 16 immediately after collection.

FIG. 2 is a flowchart illustrating a method of making a pre-vapor formulation according to at least one example embodiment.

In at least one example embodiment, as shown in Figure 2, the method generally includes mixing 75 tobacco material and at least one additive to form a mixture, heating 100 the mixture, collecting 200 the volatiles, and combining 300 the volatiles and the pre-vapor formulation.

In at least one example embodiment, the heating step 100 includes heating tobacco material to a temperature ranging from about 50 degrees Celsius to about 250 degrees Celsius (for example, about 100 degrees Celsius to about 200 degrees Celsius or about 125 degrees Celsius to about 175 degrees Celsius) to form heated tobacco material. The heating step 100 may be conducted for about 1 second to about 1 hour (for example, about 2 seconds to about 50 minutes, about 5 seconds to about 40 minutes, about 10 seconds to about 30 minutes, or about 20 seconds to about 20 minutes). It should be clear to those skilled in the art that the duration of the heating step or steps depends on the size of the vessel, the mass of tobacco being heated, and whether it is agitated or not, the nature and age of the tobacco, the temperature at which the tobacco is heated, and any prior treatment steps on the same tobacco.

In at least one example embodiment, the heating step 100 is conducted at atmospheric pressure. In other example embodiments, higher or lower pressures may be used.

In at least one example embodiment, the tobacco material may include material from any member of the genus *Nicotiana.* In at least one example embodiment, the tobacco material includes a blend of two or more different tobacco varieties.

Examples of suitable types of tobacco materials that may be used include, but are not limited to, flue-cured tobacco, Burley tobacco, Dark tobacco, Maryland tobacco, Oriental tobacco, rare tobacco, specialty tobacco, blends thereof and the like. The tobacco material may be provided in any suitable form, including, but not limited to, tobacco lamina, processed tobacco materials, such as volume expanded or puffed tobacco, processed tobacco stems, such as cut-rolled or cut-puffed stems, reconstituted tobacco materials, blends thereof, and the like.

In at least one example embodiment, the tobacco material is in the form of a substantially dry tobacco mass.

In at least one example embodiment, the tobacco material may be rotated, agitated, stirred and combinations thereof during the heating step 100.

In at least one example embodiment, the tobacco material may wetted or treated with an additive prior to the heating step 100, and may be in the form of a slurry or wet tobacco mass. The additive may include at least one of a solvent, flavors, pH modifying agents, and a casing solution. The additive may be added to the tobacco material in order to release salt bound flavors, to introduce hydrolytic breakdown of flavor precursors, or both. The additives may be chosen to promote specific reactions, such as Maillard reactions. Changing the pH of tobacco may facilitate hydrolytic break down of glucosidically bound flavors.

In at least one example embodiment, the solvent includes at least one of water, ethanol, glycerin, and propylene glycol. The solvent may improve the extraction and transfer efficiency of tobacco related flavor compounds from the heat treated tobacco material to a collection medium used in the collecting step 200 as described below. Using solvents of at least one of different polarities and different volatilities may result in creating tobacco flavors with different sensorial profiles. In at least one example embodiment, a portion of the pre-vapor formulation may be used as the solvent.

Tobacco extracts obtained by non-selective solvent extraction may contain extracted materials of different chemical nature and at least one of different molecular sizes and different weights. Using this type of extract in pre-vapor formulations may pose issues due to compounds that may accumulate in the heating section of an electronic vaping device, which may lead to deposits and chemical reactions with byproducts. The method of at least one example embodiment as disclosed herein may include use of highly volatile and easily transferable compounds that are eluted from tobacco due to their high vapor pressure.

In at least one example embodiment, the flavors may include any suitable flavor including menthol, mint flavors, fruit flavors, herb flavors, vegetable flavors, and the like.

In at least one example embodiment, the pH modifying agent includes one of an acid or a base. The pH modifying agent is selected to adjust a pH of the tobacco material to a desired level. The pH of the tobacco material may range from about 1 to about 14 or about 3 to about 12.

In at least one example embodiment, the casing solution may include water, humectants, such as propylene glycol, sugar, cocoa, licorice, fruit extracts, other ingredients, and combinations thereof.

In at least one example embodiment, once the tobacco material has been heated, volatiles are released and may be collected 200.

In at least one example embodiment, the method also includes collecting 200 volatiles from the heated tobacco material and combining 300 the volatiles with a pre-vapor formulation immediately after the collecting step 200. Therefore, the volatiles are combined with the pre-vapor formulation at the site of collection to minimize, reduce, or minimize and reduce, at least one of losses and undesirable chemical reactions.

In at least one example embodiment, the pre-vapor formulation may be maintained at or below room temperature prior to the combining step 300.

In at least one example embodiment, the pre-vapor formulation includes a vapor former. Suitable vapor formers include, but are not limited to, polyhydric alcohols, such as propylene glycol, triethylene glycol, 1,3-butanediol and glycerin; esters of polyhydric alcohols, such as glycerol mono- , di- or triacetate; and aliphatic esters of mono-, di- or polycarboxylic acids, such as dimethyl dodecanedioate and dimethyl tetradecanedioate. Example vapor formers are polyhydric alcohols or mixtures thereof, such as propylene glycol, triethylene glycol, 1,3-butanediol and glycerin.

In at least one embodiment, the pre-vapor formulation may include propylene glycol and glycerin included in a ratio of about 3:2. In at least one embodiment, the ratio of propylene glycol and glycerin may be substantially 2:3 and 3:7. In at least one embodiment, the vapor former is included in an amount ranging from about 40 percent by weight based on the weight of the pre-vapor formulation to about 90 percent by weight based on the weight of the pre-vapor formulation (for example, about 50 percent to about 80 percent, about 55 percent to about 75 percent or about 60 percent to about 70 percent).

In at least one example embodiment, the pre-vapor formulation optionally includes water. Water may be included in an amount ranging from about 5 percent by weight based on the weight of the pre-vapor formulation to about 40 percent by weight based on the weight of the pre-vapor formulation, or in an amount ranging from about 10 percent by weight based on the weight of the pre-vapor formulation to about 15 percent by weight based on the weight of the pre-vapor formulation.

In at least one example embodiment, the vapor-forming substrate may comprise a single vapor former such as, for example, glycerin. Alternatively, in some example embodiments, the vapor-forming substrate may comprise a combination of two or more vapor formers.

In at least one embodiment, the pre-vaporization formulation may also include a flavorant in an amount ranging from about 0.01 percent to about 15 percent by weight (for example, about 1 percent to about 12 percent, about 2 percent to about 10 percent, or about 5 percent to about 8 percent). The flavorant may be a natural flavorant or an artificial flavorant. In at least one embodiment, the flavorant is one of tobacco flavor, menthol, wintergreen, peppermint, herb flavors, fruit flavors, nut flavors, liquor flavors, and combinations thereof. The flavorant may include one or more volatiles extracted from tobacco material as disclosed herein.

In embodiments, the nicotine is included in the pre-vaporization formulation in an amount ranging from about 2 percent by weight to about 6 percent by weight (for example, about 2 percent to about 3 percent, about 2 percent to about 4 percent, about 2 percent to about 5 percent) based on the total weight of the pre-vaporization formulation. In at least one embodiment, the nicotine is added in an amount of up to about 5 percent by weight based on the total weight of the pre-vaporization formulation. In at least one embodiment, the nicotine content of the pre-vaporization formulation is about 2 percent by weight or greater based on the total weight of the pre-vaporization formulation. In another embodiment, the nicotine content of the pre-vaporization formulation is about 2.5 percent by weight or greater based on the total weight of the pre-vaporization formulation. In another embodiment, the nicotine content of the pre-vaporization formulation is about 3 percent by weight or greater based on the total weight of the pre-vaporization formulation. In another embodiment, the nicotine content of the pre-vaporization formulation is about 4 percent by weight or greater based on the total weight of the pre-vaporization formulation. In another embodiment, the nicotine content of the pre-vaporization formulation is about 4.5 percent by weight or greater based on the total weight of the pre-vaporization formulation.

In at least one example embodiment, the volatiles may be included in the pre-vaporization formulation in an amount ranging from about 0.01 percent by weight based on the total weight of the pre-vaporization formulation to about 5 percent by weight based on the total weight of the pre-vaporization formulation (for example, about 0.5 percent by weight to about 4 percent by weight or about 1 percent by weight to about 3 percent by weight). Therefore, the heating step 100 may be maintained, repeated, or maintained and repeated until a desired amount of volatiles have been added to the pre-vapor formulation.

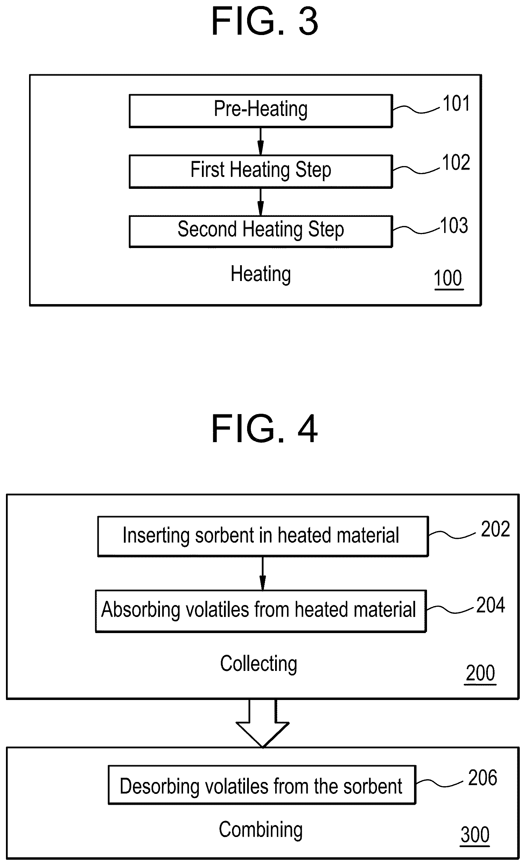

FIG. 3 is a flowchart illustrating a heating step of the method of FIG. 2 according to at least one example embodiment.

As shown in FIG. 3, in at least one example embodiment, the heating step 100 may include a pre-heating step 101 during which the tobacco material is heated to a first temperature for a first time. The heating step 100 may also include a first heating step 102 and a second heating step 102. The first heating step 102 may heat the tobacco material to a second temperature for a second time and the second heating step 103 may heat the tobacco material to a third temperature for a third time. The pre-heating step 101, first heating step 102, and second heating step 103 may be at different times and temperatures. Therefore, various volatiles, such as pyrazines, organic acids, and aromatic compounds, that may be released at different times, different temperatures, or both different times and different temperatures, may be collected from the tobacco material and added to the pre-vapor formulation.

While not shown, fewer or additional heating steps may be included in the heating step 100.

FIG. 4 is a flowchart illustrating a collecting step and a combining step of the method of FIG. 2 according to at least one example embodiment.

In at least one example embodiment, as shown in FIG. 4, the collecting step 200 may include inserting 202 a sorbent in the heated tobacco material during the heating step 100, before the heating step 100, immediately after the heating step 100, and combinations thereof. Once the sorbent is inserted into the tobacco material, the sorbent material adsorbs, absorbs, or adsorbs and absorbs 204 the volatiles produced as the tobacco is heated.

In at least one example embodiment, the sorbent may be placed in a flavor cartridge coupled with an electronic vaping device so that flavor delivery may be achieved through elution of flavors from the adsorbent to the vapor steam passing through the cartridge and flavor delivery may be enhanced by heating the flavor cartridge.

As used herein, a "sorbent" is a substance that may condense or hold molecules of other substances on its surface, take up other substances (that is, through penetration of the other substances into its inner structure, into its pores, or both), or both. The sorbent may be any adsorbent, any absorbent, any substance that may perform these functions, and combinations thereof.

In at least one example embodiment, the sorbent may be at least one of an activated carbon sorbents or other microporous materials. The sorbent may be any material, which has the ability to absorb, adsorb, or absorb and adsorb, gas constituents on the surface thereof or to assimilate such constituents into the body thereof. The sorbent may comprise one or more adsorbents. Suitable sorbents, adsorbents, or sorbents and adsorbents, include carbons such as activated carbon, aluminas, silicates, molecular sieves, zeolites, and polydimethylsiloxane (PDMS). The sorbent may be in the form of a plurality of beads or in the form of a single, monolithic body.

In at least one example embodiment, the sorbent may be selected to absorb, adsorb, or absorb and adsorb, volatiles having a desired particle size so as to achieve selective absorption, adsorption, or absorption and adsorption, of volatiles desired to be included in the pre-vapor formulation.

In at least one example embodiment, the sorbent is a microporous material (that is, microporous sorbents) such as, an activated carbon. The microporous sorbent may have pores with widths, diameters, or widths and diameters, of less than about 20 Angstroms (Å).

In at least one example embodiment, the method may also include desorbing 206 the volatiles from the sorbent. The volatiles may be desorbed from the sorbent by extraction in an aerosol forming solvent, such as at least a portion of the pre-vapor formulation during the combining step 300 as shown in FIG. 4. Therefore, the sorbent may be placed in a container along with at least a portion of the pre-vapor formulation or at least one ingredient (for example, water or propylene glycol) of the pre-vapor formulation in order to extract the volatiles from the sorbent to form a mixture of pre-vapor formulation and extracted volatiles. The mixture may then be added to an additional amount of pre-vapor formulation to form the pre-vapor formulation included extracted volatiles.

In at least one example embodiment, the volatiles may be desorbed from the sorbent using a solvent, and then immediately combined with the pre-vapor formulation after collection of the volatiles.

In at least one example embodiment, instead of combining the volatiles with the pre-vapor formulation, the sorbent may be placed in an electronic vaping device between a heater and a mouth end of the electronic vaping device so that the volatile flavors may be eluted to the vapor during vaping.

In another example embodiment, the desorbing may include heated desorption followed by bubbling the volatiles through a solvent trap, a filter, or a solvent trap and a filter. The solvent may include a portion of the pre-vapor formulation or any other suitable solvent, such as water or ethanol.

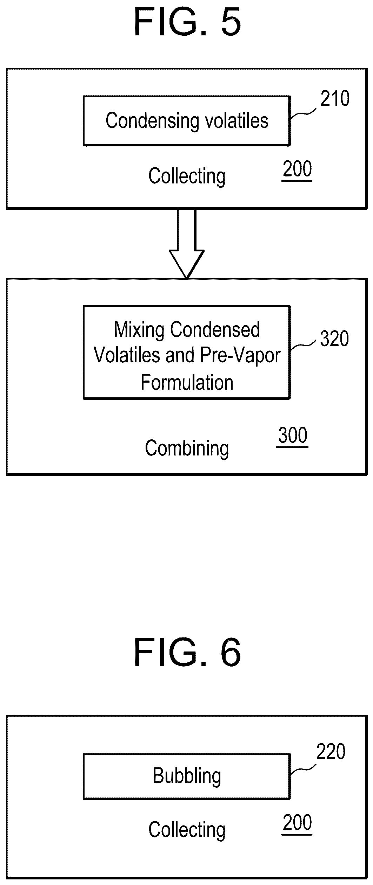

FIG. 5 is a flowchart illustrating a collecting step and a combining step according to at least one example embodiment.

In at least one example embodiment, as shown in FIG. 5, instead of the collecting step 200 as shown in FIG. 4, the collecting step 200 may include condensing 210 the volatile flavors. The volatile flavors may be condensed by cooling the volatiles as the volatiles are extracted from the tobacco material during the heating step 100. For example, the volatiles may travel through a pipe from the vessel holding the tobacco material to the vessel holding the pre-vapor formulation, and the pipe may be cooled to promote condensation along a length of the pipe. As the volatiles are cooled, the volatiles may condense on walls, surfaces, or wall and surfaces, of the pipe where the condensation may be collected. In another example embodiment, after the volatiles condense on the walls, surfaces, or walls and surfaces of the pipe, the condensation may drain into a collection container so that the condensed volatiles may be combined with the pre-vapor formulation. The cooling may reduce the temperature of the volatiles to a temperature ranging from about -78 degrees Celsius to about 10 degrees Celsius.

In at least one example embodiment, once volatiles are condensed, the combining step 300 may include mixing 320 the condensed volatiles with a pre-vapor formulation.

In at least one example embodiment, as shown in FIG. 6, instead of the collecting step 200 as shown in FIGS. 4 and 5, the collecting step 200 may include bubbling 220 the volatiles through a solvent trap.

Moreover, when the words "generally" and "substantially" are used in connection with geometric shapes, it is intended that precision of the geometric shape is not required but that latitude for the shape is within the scope of the disclosure. When used with geometric terms, the words "generally" and "substantially" are intended to encompass not only features which meet the strict definitions but also features which fairly approximate the strict definitions.

When the word "about" is used in this specification in connection with a numerical value, it is intended that the associated numerical value includes a tolerance of ±10 percent around the stated numerical value. Moreover, when reference is made to percentages in this specification, it is intended that those percentages are based on weight, that is, weight percentages.

It will now be apparent that a new, improved, and nonobvious method of making a pre-vapor formulation and electronic vaping device have been described in this specification with sufficient particularity as to be understood by one of ordinary skill in the art. Moreover, it will be apparent to those skilled in the art that numerous modifications, variations, substitutions, and equivalents exist for features of the method and the electronic vaping device which do not materially depart from the scope of the invention. Accordingly, it is expressly intended that all such modifications, variations, substitutions, and equivalents which fall within the scope of the invention as defined by the appended claims shall be embraced by the appended claims.

## Claims

1. A method of making a pre-vapor formulation, the method comprising:
heating tobacco material to a temperature ranging from about 50 degrees Celsius to about 250 degrees Celsius to form heated tobacco material;
collecting volatiles from the heated tobacco material, wherein the collecting volatiles comprises bubbling the volatiles through a solvent trap; and
combining the volatiles with a pre-vapor formulation immediately after the collecting step, wherein the pre-vapor formulation includes a vapor former, wherein the vapor former is included in an amount ranging from about 40 percent by weight based on the weight of the pre-vapor formulation to about 90 percent by weight based on the weight of the pre-vapor formulation.

2. The method of claim 1, further comprising:
combining an additive with the tobacco material prior to the heating step.

3. The method of claim 2, wherein the additive includes one or more of a casing solution, a solvent, a pH adjuster, and a flavorant.

4. The method of claim 3, wherein the solvent includes one or more of water, ethanol, glycerine, and propylene glycol.

5. The method of claim 2, 3 or 4, wherein the additive is chosen to promote Maillard reactions.

6. The method of any of claims 2 to 5, wherein the additive is chosen to promote enzymatic hydrolysis so as to facilitate release of flavors.

7. The method of any preceding claim, wherein the collecting volatiles comprises:
condensing the volatiles.

8. The method of any preceding claim, further comprising:
rotating the tobacco material during the heating step.

9. The method of any preceding claim, wherein the tobacco material is in the form of one of a slurry, a wet tobacco mass, and a substantially dry tobacco mass.

10. The method of any preceding claim, further comprising:
maintaining the pre-vapor formulation at or below room temperature.

11. The method of any preceding claim, wherein the tobacco material is heated for about 2 seconds to about 1 hour.

12. The method of any preceding claim, wherein the tobacco material comprises a blend of two or more different tobacco varieties.

13. The method of any preceding claim, further comprising:
adjusting a pH of the tobacco material prior to the heating step.
